# EUROPÄISCHE PATENTANMELDUNG

(11) **EP 4 810 347 A1**
(43) Veröffentlichungstag der Anmeldung: **23.09.2026**
(21) Anmeldenummer: 26165630.0
(22) Anmeldetag: 17.03.2026
(51) Int. Cl.: B62B 3/14

(54) **GRIFFKAPPE SOWIE EINKAUFSWAGEN**

(30) Priorität: 17.03.2025 DE 102025110220
(71) Anmelder: Wanzl GmbH & Co. KGaA, 89340 Leipheim (DE)
(72) Erfinder: Daminger, Johann, 89233 Neu-Ulm (DE); Vogg, Niklas, 89231 Neu-Ulm (DE)

(57) **Zusammenfassung**

Die Erfindung betrifft eine Griffkappe (30) als seitlicher Abschluss eines Griffbügels von einem Einkaufswagen, mit einem ersten Aufnahmebereich (31) zur teilweisen Aufnahme des Griffbügels und mit einem zweiten Aufnahmebereich (32) zur teilweisen Aufnahme eines Drahtes des Einkaufswagens.

Erfindungsgemäß wird vorgeschlagen, dass die Griffkappe (30) stoffschlüssig mit einer Halterung (34) für einen Scanner oder ein anderes elektronisches Gerät verbunden ist.

## Beschreibung

Die Erfindung betrifft eine Griffkappe als seitlicher Abschluss eines Griffbügels von einem Einkaufswagen mit den Merkmalen vom Oberbegriff des Patentanspruchs 1. Die Erfindung betrifft auch einen Einkaufswagen gemäß Patentanspruch 7.

Griffkappen als seitlicher Abschluss eines Griffbügels von einem Einkaufswagen dienen in erster Linie dazu, eine sichere Verbindung zwischen dem Griffbügel des Einkaufswagens und einem in der Regel aus Drähten bestehenden Einkaufskorb des Einkaufswagens herzustellen.

Es besteht zunehmend das Bedürfnis der Kunden, bei ihrem Einkauf die von ihnen ausgesuchten Waren mit einem zur Verfügung gestellten Scanner gleich einzuscannen, um den späteren Bezahlvorgang an dafür hergerichteten Kassen selbst durchführen zu können. Hierdurch wird das oft nötige Warten an den konventionellen Kassen umgangen.

Aus der DE 198 54 712 A1 ist beispielsweise ein Einkaufswagen mit einer Scannerhalterung bekannt. Dabei ist die Scannerhalterung im Bereich des Griffbügels an einem horizontalen Vorsprung eines seitlich am Einkaufswagen nach oben herausstehenden Stützabschnitts gehalten.

In der DE 20 2010 004 543 U1 wird eine Scannerhalterung beschrieben, die einen hülsenartigen Bereich zum Aufschieben auf einen Griffbügel eines Einkaufswagens und einen Aufnahmebereich für einen Scanner aufweist.

Der US 218/0229746 A1 kann eine Scannerhalterung entnommen werden, die über einen Clipmechanismus lösbar an dem Griffbügel eines Einkaufswagens befestigt werden kann.

Der genannte Stand der Technik bringt den Nachteil mit sich, dass durch die Scannerhalterung die Bauteilevielfalt und damit die Herstellkosten erhöht werden. Des Weiteren wird durch die dort gezeigten Positionen der Scannerhalterung die Handhabung des Einkaufswagens beim Ergreifen des Griffbügels sowie auch das Hineinlegen und Entnehmen von Waren erschwert.

Schließlich ist aus der die Merkmale vom Oberbegriff des Patentanspruchs 1 aufweisenden DE 10 2020 128 099 A1 eine Griffkappe eines Einkaufswagens bekannt.

Der vorliegenden Erfindung liegt vor dem genannten Stand der Technik die Aufgabe zu Grunde, eine Griffkappe als seitlicher Abschluss eines Griffbügels von einem Einkaufswagen vorzuschlagen, durch welche die Herstellkosten eines Griffbügels gesenkt werden können. Eine weitere Aufgabe der Erfindung wird darin gesehen, einen Einkaufswagen vorzustellen, der kostengünstig herstellbar ist.

Diese Aufgaben werden durch eine Griffkappe mit den Merkmalen von Patentanspruch 1 und einen Einkaufswagen mit den Merkmalen von Patentanspruch 7 gelöst. Vorteilhafte Ausführungen beziehungsweise Weiterbildungen der Erfindung sind den jeweils abhängigen Ansprüchen zu entnehmen.

Die Erfindung geht aus von einer Griffkappe als seitlicher Abschluss eines Griffbügels von einem Einkaufswagen. Die Griffkappe ist mit einem ersten Aufnahmebereich zur teilweisen Aufnahme des Griffbügels und mit einem zweiten Aufnahmebereich zur teilweisen Aufnahme eines Drahtes des Einkaufswagens versehen.

Erfindungsgemäß wird vorgeschlagen, dass die Griffkappe stoffschlüssig mit einer Halterung für einen Scanner oder ein anderes elektronisches Gerät verbunden ist. Auf diese Weise kann die Teilevielfalt am Einkaufswagen verringert werden, was zu einer leichteren Montage des Einkaufswagens mit reduzierten Montagekosten führt. Darüber hinaus kann durch die Erfindung auch ein Verlust der Halterung ausgeschlossen werden.

Nach einer Weiterbildung wird vorgeschlagen, dass die Halterung als eine von einer Wandung umgebene Vertiefung ausgebildet ist. Dabei grenzt die Wandung mit einem Wandungsabschnitt an den ersten Aufnahmebereich der Griffkappe zur teilweisen Aufnahme des Griffbügels und mit einem anderen Wandungsabschnitt an den zweiten Aufnahmebereich zur Aufnahme eines Drahtes des Einkaufswagens seitlich an.

Diese Weiterbildung trägt zu einer äußerst kompakten Ausbildung der aus Griffkappe und Halterung bestehenden Einheit bei. Somit wird dazu beigetragen, dass die Halterung für einen Scanner oder ein anderes elektronisches Gerät nur geringen Platz am Einkaufswagen benötigt und einen Benutzer nicht stört.

Eine Ausbildung des Erfindungsgedankens schlägt vor, dass die Wandung eine Höhe aufweist, die sich in Richtung einer Zugangsöffnung des zweiten Aufnahmebereichs zur teilweisen Aufnahme eines Drahtes des Einkaufswagens zu einer maximalen Höhe hin vergrößert. Durch diese Ausgestaltung wird dazu beigetragen, dass ein mit einem Griffende in die Halterung eingelegtes, elektronisches Gerät einen noch besseren Halt erfährt. Die an einem Einkaufswagen montierte Griffkappe mit der Halterung weist eine leichte Neigung nach vorne in Schieberichtung des Einkaufswagens auf. Daher kann die Gefahr eines Herausfallens des elektronischen Gerätes aus der Halterung noch weiter reduziert werden.

Es wird in einer zweckmäßigen Weiterbildung vorgeschlagen, dass die Vertiefung länglich ausgebildet ist, mit einer Längsrichtung, die parallel zu einer Längsrichtung des zweiten Aufnahmebereichs zur Aufnahme des Drahtes des Einkaufswagens ausgerichtet ist. Hierdurch wird es möglich, auch ein größer ausgebildetes Griffende eines Scanners oder eines anderen elektronischen Gerätes, in dem sich beispielsweise ein Akku befindet, in die Halterung einzulegen. Gleichzeitig trägt die Weiterbildung dazu bei, dass ein störendes Hineinragen der Halterung in den Arbeitsraum eines Benutzers des Einkaufswagens gering gehalten werden kann.

Es ist ferner von Vorteil, wenn die Wandung, welche die Vertiefung umgibt, in einem dem ersten Aufnahmebereich zur teilweisen Aufnahme des Griffbügels abgewandten Wandungsabschnitt eine randseitige Ausnehmung aufweist. An einem Einkaufswagen können unterschiedliche klappbare Vorrichtungen vorhanden sein, wie beispielsweise eine Korbklappe oder eine Kindersitzklappe. Zur drehbaren Befestigung können Drähte um eine Stange gebogen sein, an denen eine solche klappbare Vorrichtung befestigt ist. Typischerweise wird zwischen den gebogenen Drähten und der Stange ein Schwenklager montiert, welches bevorzugt aus Kunststoff ist. Die randseitige Ausnehmung kann im Montagezustand der Griffkappe nun dazu dienen, zu einem Teil ein solches Schwenklager aufzunehmen. Dies trägt im Montagezustand der Griffkappe dazu bei, dass diese mitsamt der Halterung trotz des Schwenklagers platzsparend und kompakt im seitlichen Bereich des Griffbügels gehalten werden kann.

Gemäß einer anderen Weiterbildung der Erfindung wird vorgeschlagen, dass die die Vertiefung umgebende Wandung eine Oberseite aufweist, die zumindest zu einem Großteil nicht über eine Oberseite des zweiten Aufnahmebereichs nach oben hinausragt. Diese Weiterbildung trägt dazu bei, dass die Griffkappe sehr kompakt gehalten werden kann und im Montagezustand am Einkaufswagen für einen Benutzer nicht als störend empfunden wird.

Eine weitere, sehr vorteilhafte Ausbildung der Erfindung schlägt vor, dass in einer Wandung des zweiten Aufnahmebereichs ein in Längsrichtung des Aufnahmebereichs verlaufendes, federndes Element vorhanden ist. Das federnde Element ist mit einer nach innen, in einen Aufnahmeraum des zweiten Aufnahmebereichs gerichteten Rastrampe versehen. Dabei weist die Rastrampe eine Rückseite auf, die derart konturiert ist, dass bei einer in Längsrichtung des zweiten Aufnahmebereichs auf die Rückseite wirkenden Kraft eine Auslenkung des federnden Elementes nach innen, in Richtung des Aufnahmeraums erfolgt.

Auf diese Weise kann in einer Montageposition der Griffkappe an einem Einkaufswagen zu einer sicheren Verbindung zwischen der Griffkappe und einem Einkaufskorb des Einkaufswagens beigetragen werden.

Schließlich ist es gemäß einer anderen Weiterbildung auch denkbar, dass in einer Wandung des zweiten Aufnahmebereichs ein in einer Längsrichtung des Aufnahmebereichs verlaufendes, federndes Element vorhanden ist, mit einer nach innen, in einen Aufnahmeraum des zweiten Aufnahmebereichs gerichteten Rastrampe. Dabei weist das Ende einer Rastschräge der Rastrampe in einem nicht ausgelenkten Zustand des federnden Elementes einen solchen Abstand zu einer gegenüberliegenden Wandung des Aufnahmeraums auf, der in einem Bereich von etwa 0,9 mm bis etwa 1,1 mm, bevorzugt in einem Bereich von etwa 1,0 mm liegt.

Durch diese Weiterbildung kann vor einer Montage der Griffkappe an einem Einkaufswagen ein unbeabsichtigtes, zu weites Hineinragen des federnden Elementes in den Aufnahmeraum des zweiten Aufnahmebereichs vermieden werden. Dies kann somit dazu beitragen, dass die Griffkappe auch in nicht montiertem Zustand ein einwandfreies Aussehen aufweist.

Wie anfangs erwähnt, soll mit der vorliegenden Erfindung auch ein Einkaufswagen unter Schutzgestellt werden, zur Verwendung in einem Einkaufsladen oder in einem Supermarkt. Ein solcher Einkaufswagen ist mit wenigstens einer erfindungsgemäßen Griffkappe ausgestattet. Hierdurch kann Benutzern des Einkaufswagens auf kostengünstige Art und Weise die Möglichkeit gegeben werden, einen Scanner oder ein anderes elektronisches Gerät beim Einkauf mitzuführen und in der Halterung abzulegen.

Der Einkaufswagen kann dadurch weitergebildet sein, dass dieser mit zwei erfindungsgemäßen Griffkappen ausgestattet ist. Dies bietet den Vorteil, dass der Einkaufswagen eine komfortable Ablage und Entnahme eines Scanners oder dergleichen sowohl für Links- als auch für Rechtshänder ermöglicht.

Schließlich wird in einer weiteren Ausbildung des Einkaufswagens noch vorgeschlagen, dass dieser ein schwenkbares Bauteil aufweist, welches über Schwenklager schwenkbar gelagert ist. Dabei ragt wenigstens ein Schwenklager zu einem Teil in die randseitige Ausnehmung einer erfindungsgemäßen Griffkappe hinein. Dies trägt dazu bei, dass die Griffkappe mitsamt der Halterung trotz des Schwenklagers platzsparend und kompakt im seitlichen Bereich des Griffbügels gehalten werden kann.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Merkmale und Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: eine erste perspektivische Ansicht einer erfindungsgemäßen Griffkappe,
- Fig. 2: eine zweite perspektivische Ansicht der Griffkappe,
- Fig. 3: eine Seitenansicht der Griffkappe,
- Fig. 4: eine perspektivische Ansicht eines Einkaufswagens im Bereich einer montierten, erfindungsgemäßen Griffkappe,
- Fig. 5: eine weitere perspektivische Ansicht des Einkaufswagens im Bereich der montierten Griffkappe,
- Fig. 6: einen perspektivischen Vertikalschnitt durch die Griffkappe mit Blick aus Richtung VI gemäß Fig. 5, wobei dadurch die Aufnahme eines gebogenen Drahtes des Einkaufswagens in der Griffkappe sichtbar ist und
- Fig. 7: einen Horizontalschnitt durch die Griffkappe mit Blick aus Richtung VII gemäß Fig. 5, wobei dadurch die Aufnahme eines Griffbügels und eines gebogenen Drahtes des Einkaufswagens in der Griffkappe sichtbar sind
- Fig. 8: eine weitere Griffkappe mit einem mobilen Endgerät in perspektivischer Ansicht,
- Fig. 9: die gleiche weitere Griffkappe aus Fig. 8 mit einem mobilen Endgerät in Draufsicht,
- Fig. 10: die gleiche weitere Griffkappe aus Fig. 8 ohne mobiles Endgerät in perspektivischer Ansicht,
- Fig. **11**: die gleiche weitere Griffkappe aus Fig. 8 in rückseitiger perspektivischer Ansicht, sowie
- Fig. 12: zwei Transportwagen, ineinander gestapelt, die jeweils mit einer weiteren Griffkappe ausgestattet sind.

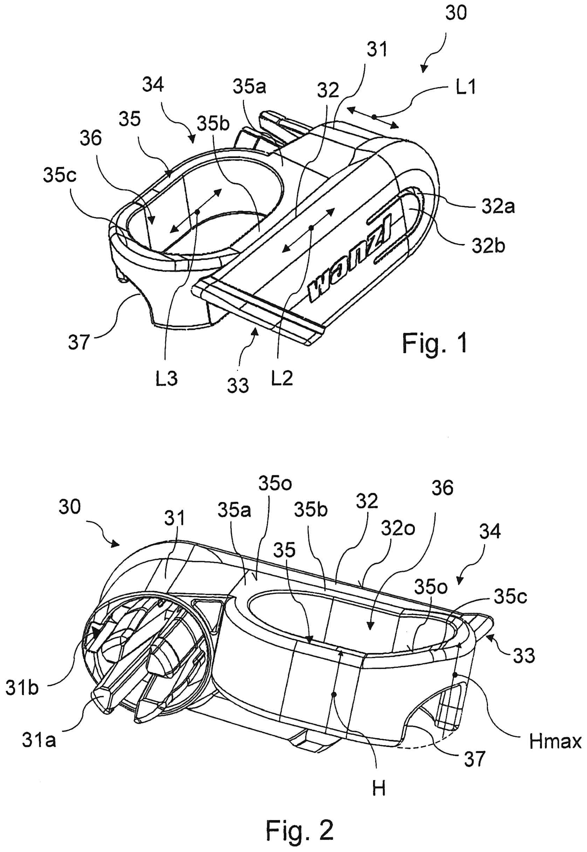

Es wird zunächst auf die Fig. 1 bis 3 Bezug genommen. Darin ist ein Griffkappe 30 ersichtlich. Diese dient als seitlicher Abschluss eines Griffbügels von einem Einkaufswagen.

Die Griffkappe 30 ist bevorzugt aus Kunststoff gefertigt. Sie weist einen ersten Aufnahmebereich 31 mit einer Längsrichtung L1 und einen zweiten Aufnahmebereich 32 mit einer Längsrichtung L2 auf, wobei die Längsrichtungen L1 und L2 senkrecht zueinander stehen. Der erste Aufnahmebereich 31 dient zur teilweisen Aufnahme eines Griffbügels des Einkaufswagens und der zweite Aufnahmebereich 32 zur teilweisen Aufnahme eines Drahtes des Einkaufswagens.

Des Weiteren weist die Griffkappe 30 eine Halterung 34 für einen Scanner oder ein anderes elektronisches Gerät auf. Die Halterung 34 ist als Vertiefung 36 ausgebildet, die von einer Wandung 35 umgeben ist. In die Vertiefung 36 kann ein Griffende eines Scanners oder eines anderen elektronischen Gerätes eingelegt und so gehalten werden. Der Umriss der Vertiefung 36 weist im Ausführungsbeispiel zwei gegenüberliegende, geradlinig verlaufende und zwei gegenüberliegende, gebogen verlaufende Abschnitte auf.

Die Vertiefung 36 ist länglich ausgebildet mit einer Längsrichtung L3. Auch der zweite Aufnahmebereich 32 ist länglich ausgebildet mit der Längsrichtung L2. Die Längsrichtungen der Vertiefung 36 und des zweiten Aufnahmebereiches 32 verlaufen parallel oder in etwa parallel zueinander.

Die Wandung 35, welche die Vertiefung 36 umgrenzt, weist einen Wandungsabschnitt 35a und einen in Längsrichtung L3 verlaufenden Wandungsabschnitt 35b auf. Die Vertiefung 36 grenzt mit dem Wandungsabschnitt 35a an den ersten Aufnahmeabschnitt 31 und mit dem Wandungsabschnitt 35b an den Aufnahmeabschnitt 32 an. Insbesondere ist die Halterung 34 über die Wandungsabschnitte 35a und 35b einstückig, also stoffschlüssig mit der Griffkappe 30 verbunden. Auf diese Weise ist die Griffkappe 30 mitsamt der Halterung 34 kostengünstig herstellbar.

Zur Aufnahme eines Griffbügels weist der erste Aufnahmebereich 31 einen Aufnahmeraum 31b auf und federnde Elemente 31a, die aus dem Aufnahmeraum 31b herausragen (vgl. Fig. 2). Abweichend vom Ausführungsbeispiel können auch mehr oder weniger federnde Elemente 31a vorhanden sein.

Aus der Fig. 2 ist besonders gut erkennbar, dass die Wandung 35 zu einem Großteil eine Höhe H aufweist, die zumindest zu einem Großteil nicht über eine Oberseite 32o des zweiten Aufnahmebereichs 32 nach oben hinausragt. Lediglich in einem Wandungsabschnitt 35c, der dem Wandungsabschnitt 35a gegenüberliegt, steigt die Höhe H der Wandung 35 bis auf eine maximale Höhe Hmax an. Die Wandung 35 überragt im Wandungsabschnitt 35c mit einer Oberseite 35o die Oberseite 32o des zweiten Aufnahmebereichs 32. Im Montagezustand der Griffkappe 30 trägt dies zu einem besseren Halt eines in die Halterung 34 eingelegten Scanners bei.

Im Bereich des Wandungsabschnitts 35c ist darüber hinaus eine randseitige, in den Figuren von unten nach oben sich erstreckende Ausnehmung 37 vorhanden. Die Ausnehmung 37 weist bevorzugt einen bogenartigen Umriss auf. Sie dient im Montagezustand der Griffkappe 30 zur teilweisen Aufnahme eines Schwenklagers, wie später noch gezeigt wird.

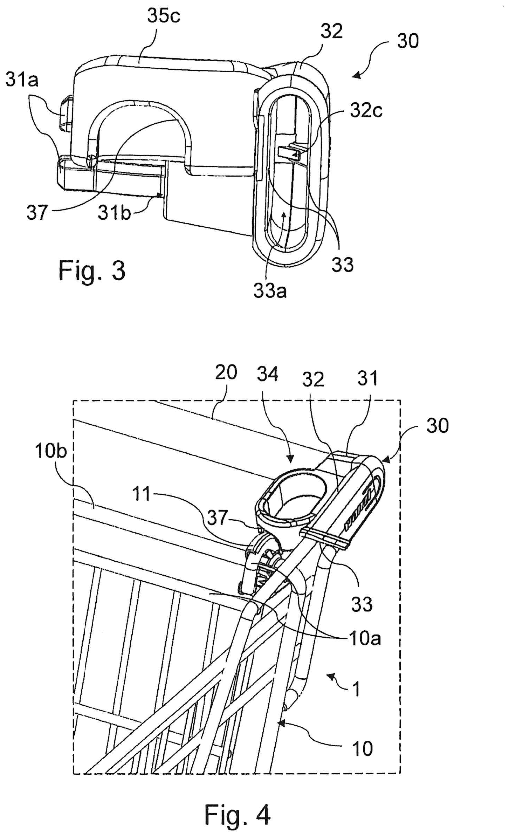

Der zweite Aufnahmebereich 32 weist eine Zugangsöffnung 33 zu einem länglichen und schmalen Aufnahmeraum 33a auf. Wie erwähnt, dient der Aufnahmebereich 32 zur Aufnahme eines Teils vom Draht eines Einkaufswagens. Eine Außenwandung des zweiten Aufnahmebereichs 32 ist mit einer Ausnehmung 32a versehen, in der ein federndes Element 32b angeformt ist. Das federnde Element 32b weist eine nach innen, also zum Aufnahmeraum 33a weisende Rastrampe 32c auf. Über die Rastrampe 32c im hinteren Bereich des Aufnahmeraums 33a kann ein eingeführter, umgebogener Draht eines Einkaufswagens (hier nicht dargestellt) rastend gehalten werden (vgl. Fig. 3, 6 und 7).

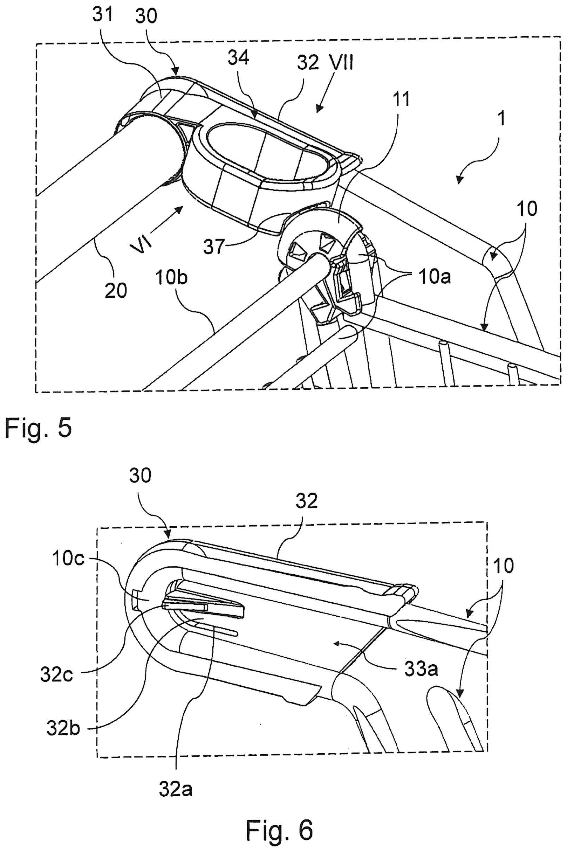

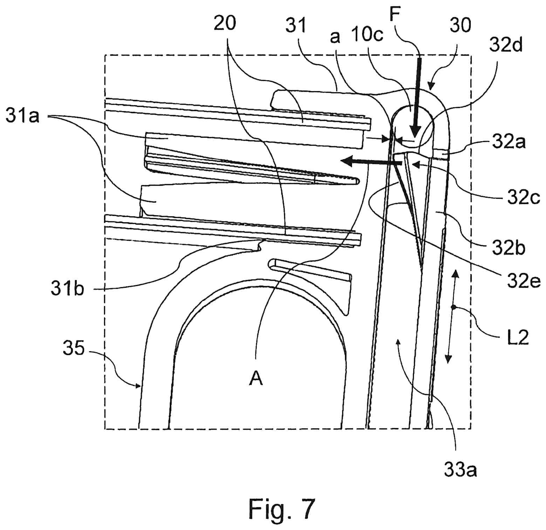

In der Fig. 4 ist nun ein Teil eines Einkaufswagens 1 dargestellt. Der Einkaufswagen 1 weist einen Einkaufskorb 10 aus Draht auf. An der Rückseite des Einkaufskorbs 10 ist ein Griffbügel 20 angeordnet, der zum Schieben des Einkaufswagens 1 dient. Die Griffkappe 30 dient als seitlicher Abschluss des Griffbügels 20 und zu dessen Verbindung mit den Einkaufskorb 10. Die Griffkappe 30 nimmt durch den ersten Aufnahmebereich 31 ein Ende des Griffbügels 20 und durch den zweiten Aufnahmebereich 32 einen um etwa 180 Grad umgebogenen Draht des Einkaufskorbes 10 auf. Konkret wird dazu der umgebogene Draht über die Zugangsöffnung 33 in den Aufnahmeraum 33a hineingeschoben. Dies erfolgt so weit, bis eine Umbiegung 10c des Drahtes die Rastrampe 32c erreicht und an einer Rastschräge 32e der Rastrampe 32c entlanggleitet. Dadurch wird das federnde Element 32b nach außen aus der Wandung des zweiten Aufnahmebereichs 32 ausgelenkt. Schließlich gelangt die Umbiegung 10c so weit hinter die Rastrampe 32c, dass das federnde Element 32b in seine Ausgangslage zurückfedern kann und der umgebogene Draht sicher hinter einer Rückseite 32d der Rastrampe 32c verriegelt ist (vgl. auch Fig. 6 und 7).

Zu erwähnen ist, dass die Rückseite 32d der Rastrampe 32c derart konturiert ist, dass bei einer in Längsrichtung L2 des zweiten Aufnahmebereichs 32 auf die Rückseite 32d wirkenden Kraft F eine Auslenkung A des federnden Elementes 32b nach innen, in Richtung des Aufnahmeraums 33a erfolgt. Eine solche Kraft F tritt insbesondere dann auf, wenn ein Benutzer an dem Griffbügel 20 des Einkaufswagens 1 zieht. In einem solchen Fall wird die Rückseite 32d der Rastrampe 32c gegen die Umbiegung 10c gedrückt und durch diese zur Auslenkung A gezwungen. Durch die besagte Konturierung wird somit zu einer sicheren Verbindung zwischen dem Griffbügel 20 und dem Einkaufskorb 10 beigetragen (vgl. Fig. 7).

Die Konturierung der Rückseite 32d kann beispielsweise derart ausgebildet sein, dass die Rückseite 32d im Anschluss an die Rastschräge 32e eine konkave Kontur aufweist.

Des Weiteren ist darauf hinzuweisen, dass ein Ende der Rastschräge 32e in einem nicht ausgelenkten Zustand des federnden Elementes 32b einen solchen Abstand a zu einer gegenüberliegenden Wandung des Aufnahmeraums 33a aufweist, der in einem Bereich von etwa 0,9 mm bis etwa 1,1 mm, bevorzugt in einem Bereich von etwa 1,0 mm liegt.

Analog kann auf der anderen, nicht dargestellten Seite des Griffbügels 20 ebenfalls eine Griffkappe 30 mit einer Halterung 34 angeordnet sein. Dies bietet den Vorteil, dass ein durch die Halterung 34 gehalterter Scanner von Links- und Rechtshändern gleichermaßen bequem genutzt werden kann.

Bei dem Einkaufswagen 1 ist zudem hinten im Bereich des Griffbügels 20 ein schwenkbares Teil 10a vorhanden. Im Ausführungsbeispiel ist dies eine schwenkbare Klappe, die beim Hineinschieben eines anderen Einkaufswagens in den Einkaufswagen 1 nach oben schwenkt. Das schwenkbare Teil 10a weist ein um eine Stange 10b gebogenes Drahtende auf, welches durch ein Schwenklager 11 schwenkbar um die Stange 10b gelagert ist.

Des Weiteren ist anhand der Fig. 4 und 5 gut erkennbar, dass das Schwenklager 11 zu einem Teil in die randseitige Ausnehmung 37 der Griffkappe 30 hineinragt. Somit kann die Griffkappe 30 trotz der Halterung 34 kompakt und platzsparend im seitlichen Bereich des Griffbügels 20 angeordnet werden.

In Fig. 7 ist gut ersichtlich, wie durch den ersten Aufnahmebereich 31 der Griffkappe 30 ein Ende des Griffbügels 20 und durch den zweiten Aufnahmebereich 32 der umgebogene Draht des Einkaufskorbes 10 mit der Umbiegung 10c im Aufnahmeraum 33a aufgenommen ist. Das Ende des als Rohr ausgebildeten Griffbügels 20 ragt dabei in den Aufnahmeraum 31b hinein, wobei die federnden Elemente 31a ihrerseits in den Griffbügel 20 hineinragen und dort mit einem nicht näher dargestellten Drahtelement verrasten.

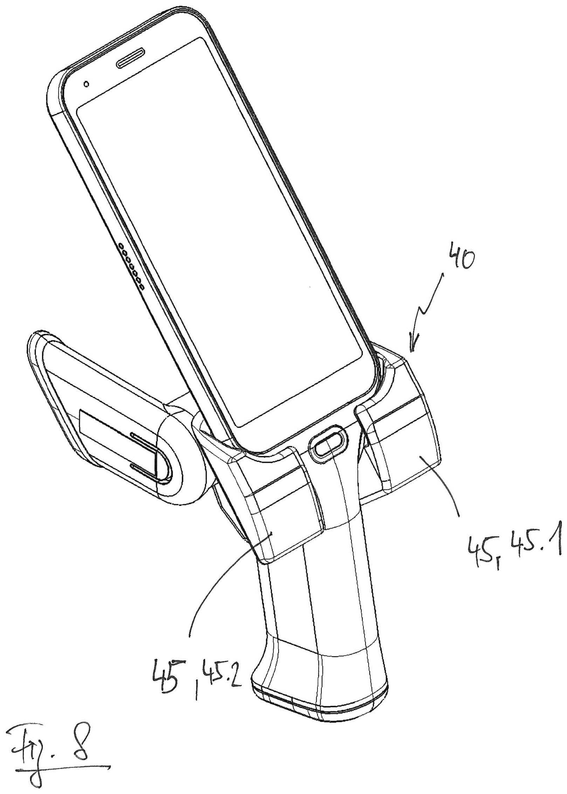

Fig. 8 zeigt in perspektivischer Ansicht eine weitere Ausführung einer Griffkappe 40 mit einem mobilen Endgerät, das eine Griffvorrichtung aufweist. Die Griffkappe 40 sieht eine Halterung 44 vor, bei der eine Wandung 45 Einsatz findet. Die Wandung 45 ist derart ausgeführt, dass sie eine Unterbrechung 47 aufweist.

Die Halterung 44 ist hierbei zum Benutzer hin von oben schräg nach unten zum Benutzer hin geführte Lösung.

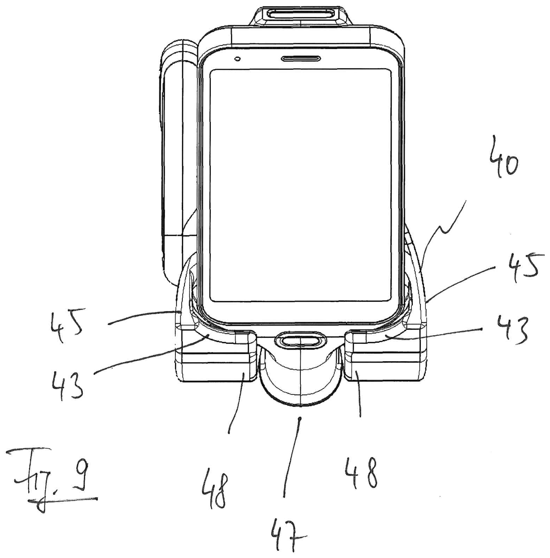

Weiterhin zeigt Figur 9 die gleiche weitere Griffkappe aus Fig. 8 mit einem mobilen Endgerät in Draufsicht.

Wie bereits bei Griffkappe 30 beschrieben, ist der rechte Teil, d.h. ein erster Aufnahmebereich 41 der weiteren Griffkappe 40 an einem Griff 20 eines Transport- bzw. Einkaufwagens 1 angeordnet.

Der linke Teil der Griffkappe 40 ist mit einem zweiten Aufnahmebereich 42 ausgestattet und ebenfalls - wie bereits bei Griffkappe 30 - an zwei Stangen des Einkaufskorbes 10 des Wagens 1 angebracht.

Hierbei ist die Unterbrechung 47 zu der schiebenden Person hin geöffnet. Eine Unterbrechung 47 von wenigen cm ist ausreichend. Die Unterbrechung 47 ermöglicht ein Anordnen verschieden großer Handys oder anderer mobiler Endgeräte.

Es hat sich als vorteilhaft erwiesen, dass die Wandung 45 an seinen Enden Verstärkungsabschnitte auf 48 aufweist. Diese Verstärkungsabschnitte 48 sind - wie dargestellt - gegenüberliegend und baugleich ausgeführt oder aber in einer alternativen Ausführungsform gegenüberliegend und mit unterschiedlicher Ausformung gestaltet.

Die Wandung 45 ist hierbei derart ausgeführt, dass ein Handy oder ein Handscanner sicher angeordnet werden kann. Es hat sich daher als sinnvoll erwiesen, wenn die Wandung 45 ins Innere mit einer leichten Schräge 43 ausgeführt ist. Diese Schräge 43 kann auch leicht radial ausgeformt sein. Weiterhin erweist sich ein abgeschrägter Bereich an der Seite des linken Teils 45.2 der Wandung 45 als vorteilhaft. Der rechte Teil 45.1 der Wandung 45 kann hierbei ebenfalls mit einem abgeschrägten Bereich ausgeführt sein.

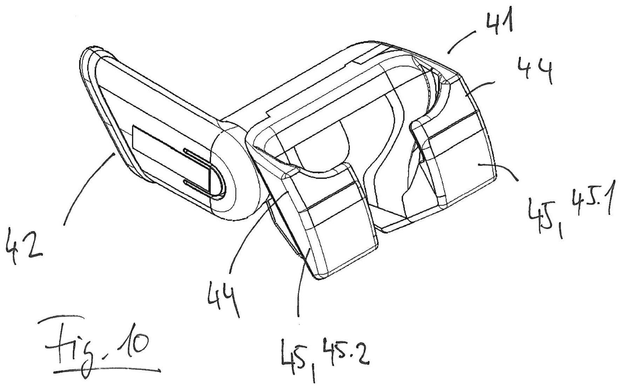

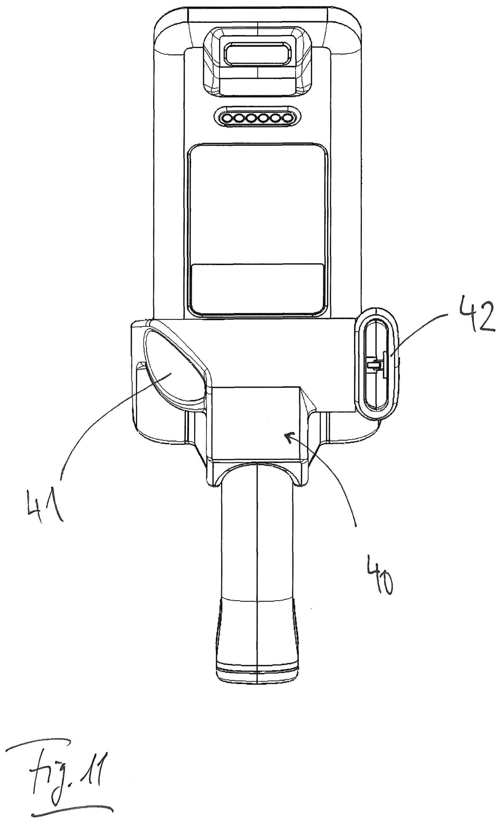

Fig. 10 zeigt die gleiche weitere Griffkappe aus Fig. 8 ohne mobiles Endgerät in perspektivischer Ansicht, Fig. 11 zeigt zudem die weitere Griffkappe in rückseitiger perspektivischer Ansicht.

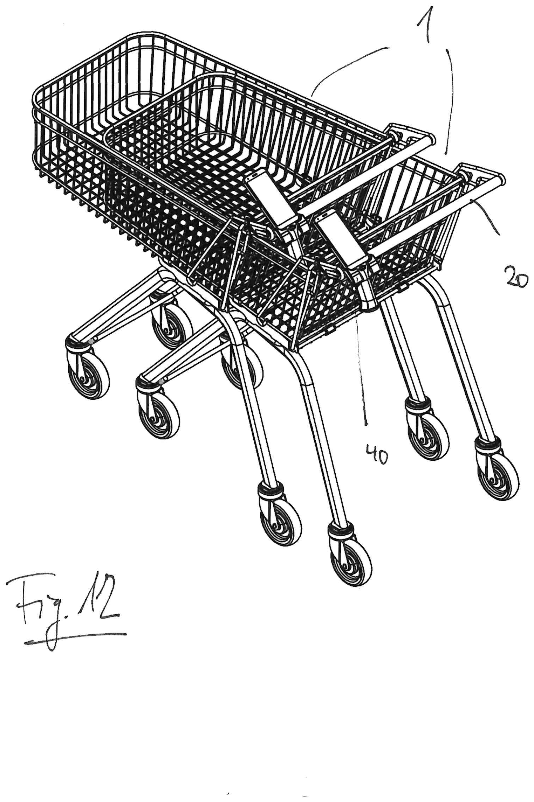

Fig. 12 zeigt weiterhin zwei Transportwagen, die ineinander gestapelt sind und jeweils mit einer weiteren Griffkappe ausgestattet sind.

### Bezugszeichenliste

- 1: Einkaufswagen, Transportwagen, Wagen
- 10: Einkaufskorb
- 10a: schwenkbares Teil
- 10b: Stange
- 10c: Umbiegung
- 11: Schwenklager
- 20: Griffbügel, Griff
- 30: Griffkappe
- 31: erster Aufnahmebereich
- 31a: federnde Elemente
- 31b: Aufnahmeraum
- 32: zweiter Aufnahmebereich
- 32a: Ausnehmung
- 32b: federndes Element
- 32c: Rastrampe
- 32e: Rastschräge
- 32o: Oberseite des zweiten Aufnahmebereichs
- 33: Zugangsöffnung
- 33a: Aufnahmeraum
- 34: Halterung
- 35: Wandung
- 35a: Wandungsabschnitt
- 35b: Wandungsabschnitt
- 35c: Wandungsabschnitt
- 35o: Oberseite der Wandung
- 36: Vertiefung
- 37: randseitige Ausnehmung
- 40: weitere Griffkappe
- 41: erster Aufnahmebereich
- 42: zweiter Aufnahmebereich
- 43: Schräge
- 44: Halterung weitere Griffkappe 40
- 45: Wandung weitere Griffkappe 40
- 45.1: rechter Teil der Wandung 45
- 45.2: linker Teil der Wandung 45
- 47: Unterbrechung
- 48: Verstärkungsabschnitte

- a: Abstand
- A: Auslenkung
- F: Kraft
- H: Höhe
- Hmax: maximale Höhe

- L1: Längsrichtung
- L2: Längsrichtung
- L3: Längsrichtung

## Patentansprüche

1. Griffkappe (30) als seitlicher Abschluss eines Griffbügels (20) von einem Einkaufswagen (1), mit einem ersten Aufnahmebereich (31) zur teilweisen Aufnahme des Griffbügels (20) und mit einem zweiten Aufnahmebereich (32) zur teilweisen Aufnahme eines Drahtes des Einkaufswagens (1), **dadurch gekennzeichnet, dass** die Griffkappe (30) stoffschlüssig mit einer Halterung (34) für einen Scanner oder ein anderes elektronisches Gerät verbunden ist.

2. Griffkappe (30) nach Anspruch 1, **dadurch gekennzeichnet, dass** die Halterung (34) als eine von einer Wandung (35) umgebene Vertiefung (36) ausgebildet ist, wobei die Wandung (35) mit einem Wandungsabschnitt (35a) an den ersten Aufnahmebereich (31) der Griffkappe (30) zur teilweisen Aufnahme des Griffbügels (20) und mit einem anderen Wandungsabschnitt (35b) an den zweiten Aufnahmebereich (32) zur Aufnahme eines Drahtes des Einkaufswagens (1) seitlich angrenzt.

3. Griffkappe (30) nach Anspruch 2, **dadurch gekennzeichnet, dass** die Wandung (35) eine Höhe (H) aufweist, die sich in Richtung einer Zugangsöffnung (33) des zweiten Aufnahmebereichs (32) zur Aufnahme eines Drahtes des Einkaufswagens (1) zu einer maximalen Höhe (Hmax) hin vergrößert.

4. Griffkappe (30) nach einem der vorhergehenden Ansprüche 2 oder 3, **dadurch gekennzeichnet, dass** die Wandung (35) in einem dem ersten Aufnahmebereich (31) zur teilweisen Aufnahme des Griffbügels (20) abgewandten Wandungsabschnitt (35c) eine randseitige Ausnehmung (37) aufweist.

5. Griffkappe (30) nach einem der vorhergehenden Ansprüche 2 bis 4, **dadurch gekennzeichnet, dass** die die Vertiefung (36) umgebende Wandung (35) eine Oberseite (35o) aufweist, die zumindest zu einem Großteil nicht über eine Oberseite (32o) des zweiten Aufnahmebereichs (32) nach oben hinausragt.

6. Griffkappe (30) nach einem der vorhergehenden Ansprüche, **dadurch gekennzeichnet, dass** in einer Wandung des zweiten Aufnahmebereichs (32) ein in einer Längsrichtung (L2) des Aufnahmebereichs (32) verlaufendes, federndes Element (32b) vorhanden ist, mit einer nach innen, in einen Aufnahmeraum (33a) des zweiten Aufnahmebereichs (32) gerichteten Rastrampe (32c), wobei die Rastrampe (32c) eine Rückseite (32d) aufweist, die derart konturiert ist, dass bei einer in Längsrichtung (L2) des zweiten Aufnahmebereichs (32) auf die Rückseite (32d) wirkenden Kraft (F) eine Auslenkung (A) des federnden Elementes (32b) nach innen, in Richtung des Aufnahmeraums (33a) erfolgt.

7. Griffkappe (30) nach einem der vorhergehenden Ansprüche, **dadurch gekennzeichnet, dass** in einer Wandung des zweiten Aufnahmebereichs (32) ein in einer Längsrichtung (L2) des Aufnahmebereichs (32) verlaufendes, federndes Element (32b) vorhanden ist, mit einer nach innen, in einen Aufnahmeraum (33a) des zweiten Aufnahmebereichs (32) gerichteten Rastrampe (32c), wobei ein Ende (...) einer Rastschräge (32e) der Rastrampe (32c) in einem nicht ausgelenkten Zustand des federnden Elementes (32b) einen solchen Abstand (a) zu einer gegenüberliegenden Wandung des Aufnahmeraums (33a) aufweist, der in einem Bereich von 0,9 mm bis 1,1 mm liegt.

8. Einkaufswagen (1) zur Verwendung in einem Einkaufsladen oder in einem Supermarkt, **gekennzeichnet durch** wenigstens eine Griffkappe (30) nach einem der vorhergehenden Ansprüche.

9. Einkaufswagen (1) nach Anspruch 8, **gekennzeichnet durch** zwei Griffkappen (30) nach einem der vorhergehenden Ansprüche.

10. Einkaufswagen (1) nach Anspruch 8 oder 9, **dadurch gekennzeichnet, dass** dieser einen schwenkbaren Teil (10a) aufweist, welcher über Schwenklager (11) schwenkbar gelagert ist, wobei wenigstens ein Schwenklager (11) zu einem Teil in die randseitige Ausnehmung (37) einer Griffkappe (30) nach einem der Ansprüche 1 bis 6 hineinragt.
